Europäisches Patentamt

European Patent Office

Office européen des brevets

(11) Numéro de publication: **0 219 373**
**A1**

(12) **DEMANDE DE BREVET EUROPEEN**

(21) Numéro de dépôt: **86401930.2**

(22) Date de dépôt: **02.09.86**

(51) Int. Cl.⁴: **B 62 M 23/02**

(30) Priorité: **16.09.85 FR 8513707**

(43) Date de publication de la demande:
**22.04.87 Bulletin 87/17**

(84) Etats contractants désignés:
**AT BE CH DE GB IT LI LU NL**

(71) Demandeur: **CYCLES PEUGEOT Société dite:**
**Beaulieu**
**F-25700 Valentigney (FR)**

(72) Inventeur: **Lacroix, Bernard**
**2, rue de la Voulvre**
**F-25200 Montbeliard (FR)**

(74) Mandataire: **Moncheny, Michel et al**
**c/o Cabinet Lavoix 2 Place d'Estienne d'Orves**
**F-75441 Paris Cedex 08 (FR)**

(54) **Dispositif de transmission pour véhicule motorisé à deux roues.**

(57) Le problème que l'invention se propose de résoudre est de fournir un dispositif de transmission qui tout en étant simple et d'un coût analogue à celui des dispositifs existants, permette de remplir cette fonction et de pouvoir faire démarrer un véhicule en côte ou dans des conditions difficiles, de façon satisfaisante.

À cet effet, la poulie réceptrice (6) du premier étage de la transmission, à poulies et courroie, comporte des moyens d'accouplement à friction, actionnés par un câble (24), dont l'organe de commande est porté par le guidon du véhicule et se trouve donc être accessible à l'utilisateur dans les conditions normales de conduite.

FIG.2

EP 0 219 373 A1

## Description

Dispositif de transmission pour véhicule motorisé à deux roues

La presente invention concerne les dispositifs de transmission pour véhicules motorisés à deux roues, du type comprenant entre un arbre moteur et une roue motrice, un dispositif d'embrayage à commande automatique, un premier étage de transmission du type à poulie motrice, courroie et poulie réceptrice, et un deuxième étage de transmission comprenant un organe menant disposé sur le même arbre intermédiaire que la poulie réceptrice et un organe mené porté par la roue motrice du véhicule.

Dans un tel dispositif, il est également connu de prévoir un mécanisme d'accouplement à crabot entre la poulie réceptrice du premier étage de transmission et l'organe menant du deuxième étage, de façon à pouvoir interrompre la chaîne cinématique et permettre au véhicule de fonctionner en vélo, c'est-à-dire sous la seule action des pédales et d'une transmission à chaîne.

La mise en prise ou au contraire la désolidarisation du mécanisme à crabot sont réalisées par des moyens de commande disposés directement sur la poulie réceptrice de sorte qu'aussi bien du fait de la nature des moyens d'accouplement utilisés entre la poulie réceptrice et l'organe menant du deuxième étage, que de la position de l'organe de commande de ces moyens d'accouplement, il est tout à fait impossible de pouvoir utiliser un tel dispositif comme embrayage en cours d'utilisation du véhicule.

Or, pour des véhicules destinés à une utilisation tout terrain ou même lorsqu'un tel véhicule doit démarrer en côte, le régime à partir duquel l'embrayage automatique est serré peut être insuffisant pour permettre le démarrage du véhicule dans de bonnes conditions.

Le problème que l'invention se propose de résoudre est donc de fournir un dispositif de transmission qui tout en étant simple et d'un coût analogue à celui des dispositifs existants, permette de remplir cette fonction et de pouvoir faire démarrer un véhicule en côte ou dans des conditions difficiles, de façon satisfaisante.

A cet effet, l'invention a pour objet un dispositif de transmission du type précité, caractérisé en ce qu'il comprend au niveau du premier étage de transmission, un dispositif d'accouplement à friction, ce dispositif d'accouplement étant associé à des moyens de commande accessibles à l'utilisateur en position normale de conduite du véhicule.

Suivant d'autres caractéristiques :

- le dispositif d'accouplement à friction est incorporé à la poulie réceptrice du premier étage de transmission;

- la poulie réceptrice est du type comprenant un flasque fixe et un flasque mobile axialement par rapport au flasque fixe, entre deux positions, une position rapprochée du flasque fixe pour laquelle la poulie est entraînée par la courroie et une position éloignée du flasque fixe, pour laquelle la poulie n'est pas entraînée;

- il est prévu entre les deux flasques de la poulie réceptrice une bague de retenue de la courroie lorsque le flasque mobile est en position écartée;

- le dispositif d'actionnement du flasque mobile comprend une tige montée coulissante axialement dans un support tubulaire de la poulie réceptrice, et un mécanisme d'actionnement à levier et à câble dont l'organe de commande est constitué par une poignée ou manette portée par le guidon du véhicule;

- il est prévu des moyens pour maintenir l'organe de commande dans une position correspondant à la position écartée du flasque mobile.

L'invention va être décrite plus en détail ci-dessous en de référant au dessin annexé, donné uniquement à titre d'exemple et sur lequel :

- la Figure 1 est une vue d'ensemble d'un véhicule équipé d'un dispositif de transmission suivant l'invention;

- la Figure 2 est une vue en coupe axiale avec arrachement de la partie intermédiaire du dispositif de transmission;

- la Figure 3 est une vue de détail montrant l'organe de commande disposé sur le guidon du véhicule.

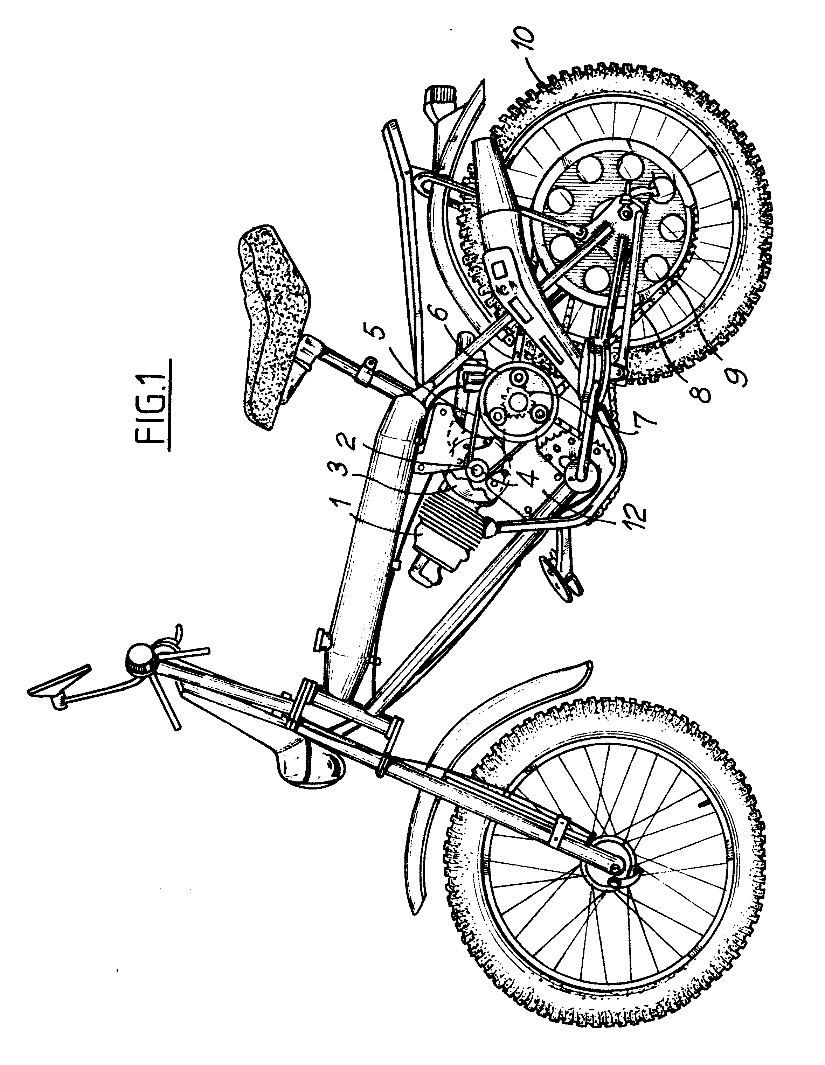

L'ensemble motopropulseur du véhicule représenté à la Figure 1 comprend un moteur 1 et son arbre de sortie 2. Sur cet arbre est monté un dispositif d'embrayage 3 à commande automatique, qui peut être par exemple un embrayage de type centrifuge.

L'organe mené de cet embrayage est solidaire d'une poulie motrice 4 qui entraîne par l'intermédiaire d'une courroie 5 une poulie réceptrice 6, cet ensemble à poulies et courroie constituant un premier étage de la transmission.

La poulie réceptrice 6 entraîne elle-même en rotation un pignon 7 qui, par l'intermédiaire d'une chaîne 8 entraîne un pignon récepteur 9 porté par la roue arrière motrice 10 du véhicule.

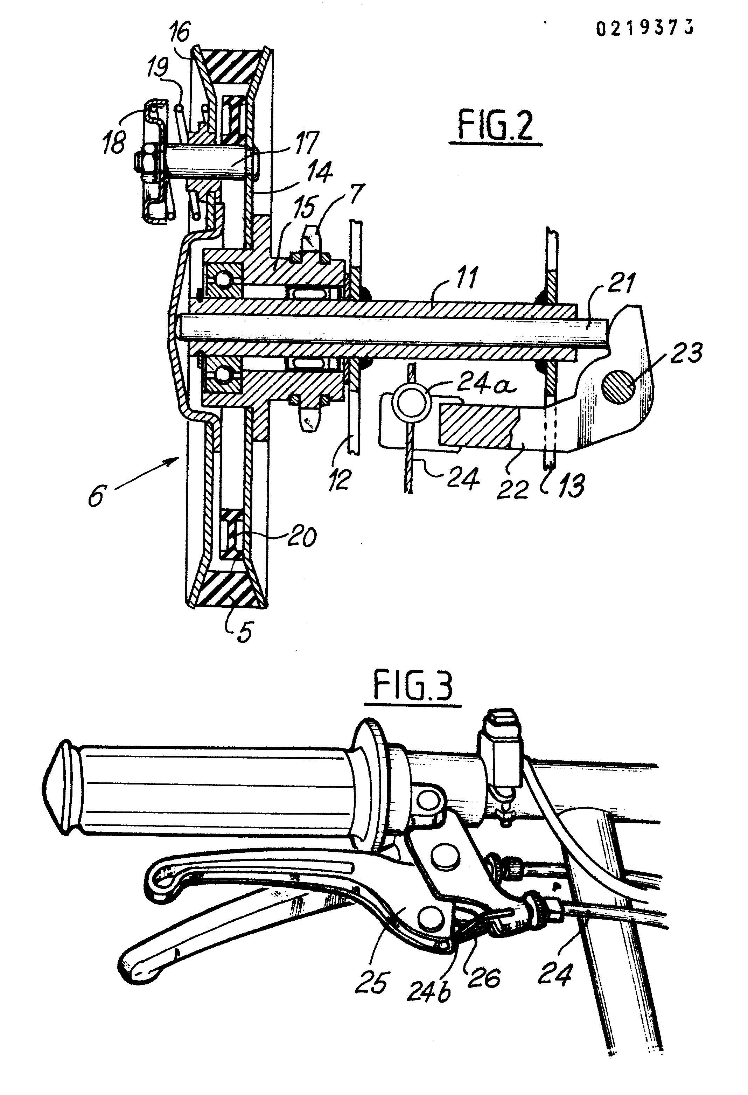

Suivant l'invention, un deuxième dispositif d'embrayage est incorporé au premier étage de transmission à poulies et courroie et dans l'exemple représenté, ce deuxième dispositif d'embrayage est incorporé à la poulie réceptrice 6 qui l'on voit plus en détail sur la Figure 2.

Cette poulie réceptrice montée sur un support tubulaire 11 fixé entre deux plaques 12, 13 comprend un flasque 14 fixe axialement, solidaire d'un moyeu 15 sur lequel est également monté le pignon menant 7 du deuxième étage de la transmission. La poulie réceptrice est complétée par un flasque 16 monté mobile axialement et guidé par des doigts 17 fixés sur le flasque fixe 14. A l'extrémité de ces doigts sont montées des coupelles 18 contre lesquelles prennent appui des ressorts 19 sollicitant le flasque mobile en direction du flasque fixe.

Une bague 20 en polyamide ou matériau analogue est disposée autour des doigts 17 et sert de bague de maintien ou de retenue pour la courroie 5 lorsque le flasque mobile est écarté du flasque fixe.

Le mécanisme d'actionnement du flasque mobile comprend une tige 21 montée coulissante à l'intérieur du support tubulaire 11 et qui est elle-même actionnée par un levier de commande 22 monté oscillant autour d'un axe 23 et sur lequel est accrochée une extrémité 24a d'un câble 24 dont l'autre extrémité 24b est reliée à une poignée ou une manette de commande 25 montée sur le guidon du véhicule (Figure 3).

Cette manette est munie d'un organe de verrouillage 26 simplement réalisé en fil métallique articulé sur la partie fixe de la manette et susceptible de bloquer cette dernière dans sa position correspondant à la position écartée du flasque mobile.

Le fonctionnement du dispositif que l'on vient de décrire est très simple : en fonctionnement normal, si l'utilisateur n'agit pas sur la manette 25, le flasque mobile 16 de la poulie réceptrice est en position rapprochée du flasque fixe 14 et cette poulie réceptrice peut être entraînée par la courroie. C'est alors le dispositif d'embrayage automatique qui détermine le régime du moteur à partir duquel l'embrayage est réalisé et la roue motrice entraînée par le moteur.

Cependant, si le véhicule doit démarrer en côte, l'utilisateur peut en agissant sur la manette 25 provoquer le débrayage de la poulie réceptrice et ne relâcher la manette que lorsque le régime du moteur aura atteint une valeur suffisante pour réaliser un entraînement correct du véhicule.

S'il souhaite faire fonctionner le véhicule en vélo, il place la manette 25 en position de débrayage et la maintient dans cette position au moyen de l'organe de verrouillage 26.

On voit donc que ce dispositif de transmission permet d'atteindre parfaitement les objectifs fixés : il est très simple dans sa réalisation et donc peu coûteux et il permet cependant de faire démarrer le véhicule même en côte dans des conditions satisfaisantes.

Bien entendu des variantes peuvent être envisagées : c'est ainsi que le dispositif d'embrayage supplémentaire prévu peut être disposé au niveau de la poulie motrice du premier étage de la transmission au lieu d'être incorporé à la poulie réceptrice. Cet embrayage pourrait également être interposé entre la poulie réceptrice et le pignon du deuxième étage de la transmission.

**Revendications**

1 - Dispositif de transmission pour véhicule motorisé à deux roues, du type comprenant entre un arbre moteur (2) et une roue motrice (10), un dispositif d'embrayage (3) à commande automatique, un premier étage de transmission du type à poulie motrice (4), courroie (5) et poulie réceptrice (6), et un deuxième étage de transmission comprenant un organe menant (7) disposé sur le même arbre intermédiaire que la poulie réceptrice et un organe mené (9) porté par la roue motrice du véhicule, caractérisé en ce qu'il comprend au niveau du premier étage de transmission, un dispositif d'accouplement à friction (5, 14, 16), ce dispositif d'accouplement étant associé à des moyens de commande (25) accessibles à l'utilisateur en position normale de conduite du véhicule.

2 - Dispositif suivant la revendication 1, caractérisé en ce que le dispositif d'accouplement à friction est incorporé à la poulie (6) réceptrice du premier étage de tranmission.

3 - Dispositif suivant la revendication 2, caractérisé en ce que la poulie réceptrice (6) est du type comprenant un flasque fixe (14) et un flasque (16) mobile axialement par rapport au flasque fixe, entre deux positions, une position rapprochée du flasque fixe pour laquelle la poulie (6) est entraînée par la courroie (5) et une position éloignée du flasque fixe, pour laquelle la poulie n'est pas entraînée.

4 - Dispositif suivant la revendication 3, caractérisé en ce que il est prévu entre les deux flasques (14, 16) de la poulie réceptrice une bague (20) de retenue de la courroie lorsque le flasque mobile est en position écartée.

5 - Dispositif suivant la revendication 4, caractérisé en ce que le dispositif d'actionnement du flasque mobile (16) comprend une tige (21) montée coulissante axialement dans un support tubulaire (11) de la poulie réceptrice, et un mécanisme d'actionnement à levier (13) et à câble (24) dont l'organe de commande est constitué par une poignée ou manette (25) portée par le guidon du véhicule.

6 - Dispositif suivant l'une quelconque des revendications 1 à 5, caractérisé en ce qu'il est prévu des moyens (26) pour maintenir l'organe de commande (25) dans une position correspondant à la position écartée du flasque mobile.

7 - Dispositif suivant la revendication 6, caractérisé en ce que lesdits moyens comprennent un organe (26) en fil métallique rigide, articulé sur le support de l'organe de commande (25) et qui, dans une position, bloque cet organe de commande en position de débrayage.

FIG.1

0219373

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-C- 684 482 (FICHTEL & SACHS) * Pages 1,2; figures 1,2 * | 1 | B 62 M 23/02 |
| | --- | | |
| Y | FR-A-2 532 607 (HONDA) * Page 2, lignes 20-37; pages 3-12; figures 1-6 * | 1 | |
| | --- | | |
| A | GB-A-1 207 484 (DOHERTY MOTOR CYCLE ACCESSORIES) * Figures 1-4; pages 1, ligne 1 - page 2, ligne 127 * | 7 | |
| | ----- | | |

DOMAINES TECHNIQUES RECHERCHES (Int. Cl.4)

B 62 M

Le présent rapport de recherche a été établi pour toutes les revendications

| Lieu de la recherche | Date d'achèvement de la recherche | Examinateur |
|---|---|---|
| LA HAYE | 07-11-1986 | VANNESTE M.A.R. |